# EUROPÄISCHE PATENTSCHRIFT

(11) **EP 4 051 942 B1**
(45) Veröffentlichungstag und Bekanntmachung des Hinweises auf die Patenterteilung: **15.05.2024**
(21) Anmeldenummer: 20800859.9
(22) Anmeldetag: 30.10.2020
(51) Int. Cl.: F16L 37/084

(54) **SCHNELLVERBINDER UND VERBINDUNGSANORDNUNG MIT VERBESSERTER DICHTRINGARRETIERUNG**
QUICK CONNECTOR AND CONNECTION ASSEMBLY HAVING IMPROVED SEALING-RING LOCKING
RACCORD RAPIDE ET ENSEMBLE DE RACCORDEMENT AYANT UN VERROUILLAGE DE BAGUE D'ÉTANCHÉITÉ AMÉLIORÉ

(30) Priorität: 31.10.2019 DE 102019129542
(43) Veröffentlichungstag der Anmeldung: 07.09.2022
(73) Patentinhaber: NORMA Germany GmbH, 63477 Maintal (DE)
(72) Erfinder: GALLOU, Cedric, 35580 Guichen (FR)
(74) Vertreter: Patentanwälte Olbricht Buchhold Keulertz
(86) Internationale Anmeldenummer: PCT/EP2020/080589
(87) Internationale Veröffentlichungsnummer: WO 2021/084106

(56) Entgegenhaltungen:
- US-A- 4 753 458
- US-B1- 6 517 120

## Beschreibung

Die Erfindung betrifft einen Schnellverbinder gemäß dem Oberbegriff von Anspruch 1 sowie eine Verbindungsanordnung. US 4,753,458 offenbart einen solchen Schnellverbinder.

Zum Herstellen von fluidführenden Verbindungen werden häufig Schnellverbinder eingesetzt. Hierzu kann an einem Schnellverbinder einseitig ein Schlauch oder ein erster Fluidkanal angeordnet werden. Mit einem Anschlussstutzen kann ein zweiter Fluidkanal an den Schnellverbinder angeschlossen werden. Der Anschlussstutzen kann in einen Aufnahmeraum des Schnellverbinders hineingesetzt und ortsfest positioniert werden.

Damit zwischen dem Schnellverbinder und dem Anschlussstutzen keine Leckage entsteht, werden Dichtringe eingesetzt, welche den Aufnahmeraum umfangsseitig umgeben. Die Dichtungsringe werden durch eine Hülse innerhalb des Schnellverbinders befestigt. Die Hülse weist einen Vorsprung auf, welcher in eine umlaufende Nut hineinragen kann, um die Hülse und damit auch die Dichtringe ortsfest zu positionieren.

Derartige Befestigungskonzepte von Dichtringen sind jedoch problematisch, da die Hülse und auch der Schnellverbinder hierzu flexibel bzw. elastisch ausgeführt sein müssen. Insbesondere hochtemperaturfeste Materiale sind oftmals brüchig. Somit können solche Schnellverbinder nicht aus hochtemperaturfesten Materialen zusammengesetzt werden, da bei einem Einsetzen der Hülse in die umlaufende Nut der Schnellverbinder oder die Hülse brechen können.

Des Weiteren weisen derartige Schnellverbinder aufgrund der als Hinterschneidung ausgeführten umlaufenden Nut einen höheren Herstellungsaufwand auf. Darüber hinaus ist problematisch, dass bei einem Austausch der Dichtringe ein Materialabtrag durch die Hülse und dadurch eine zunehmende Fehlausrichtung der Dichtringe durch die Hülse entstehen. Die zunehmende Fehlausrichtung kann zu einer Verminderung der Dichtwirkung führen.

Aufgabe der Erfindung ist es daher, einen Schnellverbinder und eine Verbindungsanordnung bereitzustellen, die mit einem reduzierten Aufwand herstellbar sind und für den Einsatz von hochtemperaturfesten Materialen geeignet sind.

Hauptmerkmale der Erfindung sind im kennzeichnenden Teil von Anspruch 1 und Anspruch 10 angegeben. Ausgestaltungen der Erfindung sind Gegenstand der Ansprüche 2 bis 9.

Die Erfindung betrifft einen Schnellverbinder. Der Schnellverbinder weist ein Gehäuse mit einem Aufnahmeraum zum fluiddichten Aufnehmen eines Anschlussstutzens auf, welcher in einen Leitungsabschnitt zum Führen eines Fluids übergeht. Des Weiteren weist der Schnellverbinder einen den Aufnahmeraum zumindest bereichsweise radial umgebenden Dichtungsraum mit mindestens einem im Dichtungsraum angeordneten Dichtring auf. Eine Verschlusseinheit des Schnellverbinders dient zum Arretieren des mindestens einen Dichtrings, wobei die Verschlusseinheit eine Hülse aufweist, welche den Dichtungsraum zumindest bereichsweise begrenzt und mindestens einen sich von der Hülse erstreckenden Arm aufweist, welcher dazu ausgebildet ist, die Verschlusseinheit am Gehäuse zu arretieren.

Die mehrteilige Verschlusseinheit kann eine Haltefunktion bzw. Abstützfunktion für die Dichtringe durch die Hülse sowie eine Haltefunktion für die Hülse durch den mindestens einen Arm bereitstellen. Hierdurch sind entgegen den bisher eingesetzten Schnellverbinder-Geometrien keine Hinterschneidungen zum Befestigen von Halteelementen im Gehäuse notwendig. Aufgrund der spannungsfreien Befestigung der Verschlusseinheit in dem Gehäuse können für das Gehäuse sowie für die Verschlusseinheit spröde bzw. brüchige Materialien verwendet werden, welche für Hochtemperaturanwendungen sowie Anwendungen mit geringer Permeation benötigt werden.

Der mindestens eine Arm der Verschlusseinheit kann hierbei relativ zur Hülse der Verschlusseinheit flexibel ausgeführt sein. Die Hülse kann eine im Wesentlichen rohrförmige oder zylinderförmige Ausprägung aufweisen, welche beispielsweise mit einer Form des Aufnahmeraums und/oder des Dichtungsraums korrespondiert. Der mindestens eine Arm kann mit dem Gehäuse formschlüssig oder reibschlüssig wechselwirken und die gesamte Verschlusseinheit, insbesondere axial, ortsfest arretieren. Somit kann der mindestens eine im Dichtungsraum angeordnete Dichtring durch die Hülse der Verschlusseinheit gestützt und in seiner vorgesehenen Position gehalten werden.

Die Hülse der Verschlusseinheit sowie das Gehäuse können aus einem hochtemperaturfesten Material und insbesondere aus einem spröden bzw. brüchigen Material bestehen, da die Hülse formschlüssig und ohne Spannung im Dichtungsraum des Gehäuses angeordnet wird. Der mindestens eine Arm kann aufgrund einer axial größeren Ausdehnung trotz der spröden Materialeigenschaften eine geringfügige Elastizität aufweisen und somit zum Positionieren der Hülse einrastend im Gehäuse eingesetzt werden.

Das Gehäuse des erfindungsgemäßen Schnellverbinders kann technisch besonders einfach hergestellt werden, da keine Hinterschneidungen und komplexe Geometrien notwendig sind. Somit kann die Herstellungsgeschwindigkeit des Schnellverbinders erhöht werden.

Die Dimensionen des Dichtungsraums können auch bei mehrmaligem Austauschen der Dichtringe aufrechterhalten werden, weil die Hülse der Verschlusseinheit optimal und reibungsfrei im Gehäuse hineinsetzbar ist. Darüber hinaus können mechanische Beschädigungen des Gehäuses bei einem Austausch der Dichtringe vermieden werden.

Das Gehäuse kann derart ausgeformt sein, dass die Verschlusseinheit in einem eingesetzten Zustand optimal ausgerichtet ist. Dies kann beispielsweise durch entsprechend dem Arm der Verschlusseinheit ausgeformte Ausnehmungen ermöglicht werden. Somit kann die Gefahr einer fehlerhaften Montage gesenkt werden. Des Weiteren kann hierdurch auch eine optimale axiale Einbauposition der Verschlusseinheit im Gehäuse sichergestellt werden.

Erfindungsgemäß geht der Dichtungsraum an einem dem Leitungsabschnitt gegenüber liegenden Ende in einen Arretierungsabschnitt über, welcher den Dichtungsraum radial überragt und/oder axial endseitig durch einen Vorsprung begrenzt ist. Erfindungsgemäß ragt der mindestens eine Arm der Verschlusseinheit in den Arretierungsabschnitt hinein und ist durch eine Arretierungshülse radial gespreizt. Hierdurch kann der mindestens eine Arm der Verschlusseinheit in den Arretierungsabschnitt hineinragen und sich an dem Vorsprung formschlüssig einhacken bzw. einrasten. Durch diese Maßnahme kann die Verschlusseinheit ortsfest an dem Arretierungsabschnitt angeordnet werden. Die Verschlusseinheit ist im arretierten Zustand mit dem Gehäuse formschlüssig verbunden und kann sich unbeabsichtigt nicht vom Gehäuse des Schnellverbinders lösen.

Insbesondere bei gegenüber der Hülse flexibel ausgeführten Armen, welche die Hülse radial überragen, können die Arme als Einrastelemente für den als Einrastnut ausgestalteten Arretierungsabschnitt eingesetzt werden. Wird das Verschlusselement und damit die Hülse korrekt im Dichtungsraum positioniert, gleitet der mindestens eine Arm in den Arretierungsabschnitt hinein und bildet einen Formschluss aus.

Gemäß einer vorteilhaften Ausgestaltung kann eine zusätzliche Arretierungshülse verwendet werden. Diese kann im Bereich des mindestens einen Arms der Verschlusseinheit in den Arretierungsabschnitt hineingesetzt werden. Durch das Einsetzen der Arretierungshülse wird der mindestens eine Arm radial gegen das Gehäuse gepresst bzw. gespreizt, wodurch die Verschlusseinheit besonders effektiv gegen ein unbeabsichtigtes Lösen gesichert werden kann. Die Verschlusseinheit kann technisch besonders einfach gesichert werden, wenn die Arretierungshülse endseitig in den Arretierungsabschnitt einsetzbar ist. Insbesondere kann hierdurch der mindestens eine Arm der Verschlusseinheit durch die eingesetzte Arretierungshülse gegen das Gehäuse im Bereich des Arretierungsabschnitts gedrückt und ortsfest positioniert werden. Nach einer weiteren Ausführungsform weist die Verschlusseinheit zwei Arme auf, welche sich von der Hülse erstrecken, wobei die Arme umfangsseitig sich gegenüber liegend angeordnet sind. Die beiden Arme, insbesondere mindestens zwei Arme, können axial gegen das Gehäuse gepresst werden, um die Verschlusseinheit ortsfest im Gehäuse zu positionieren. Die Kraft zum axialen Pressen der Arme gegen das Gehäuse kann hierbei durch elastische Materialeigenschaften der Arme selbst und/oder durch die im Arretierungsabschnitt des Gehäuses eingesetzte Arretierungshülse erzeugt werden. Durch die sich gegenüber liegende Anordnung der Arme der Verschlusseinheit kann eine gleichmäßige Kraftverteilung auf die beiden gegenüberliegenden Arme umgesetzt werden. Alternativ können auch drei oder mehr Arme bei der Realisierung der Verschlusseinheit eingesetzt werden.

Durch die Arme kann die Verschlusseinheit und damit auch die Hülse der Verschlusseinheit axial in einer vordefinierten Position gehalten werden.

Gemäß einem weiteren Ausführungsbeispiel ist die Arretierungshülse zum Freigeben des Aufnahmeraums für den Anschlussstutzen quer zu einer Längsrichtung bzw. Axialrichtung verformbar oder bewegbar. Je nach Ausgestaltung der Arretierungshülse kann diese vorzugsweise quer zur Längsrichtung des Gehäuses, welcher einer Fließrichtung durch das Gehäuse entspricht, beweglich oder verformbar sein. Somit können die mindestens zwei Arme als Führungslager für die Arretierungshülse dienen, welche die Arme gleichzeitig gegen ein Entnehmen der Verschlusseinheit aus dem Gehäuse blockiert. Bevorzugterweise können die Arme der Verschlusseinheit derart ausgestaltet sein, dass die Arretierungshülse zwischen zwei Positionen bewegbar oder verformbar ist. In einer ersten Position kann die Arretierungshülse den Aufnahmeraum des Gehäuses freigeben und in einer zweiten Position kann die Arretierungshülse den Aufnahmeraum sperren bzw. einengen, um einen eingesetzten Anschlussstutzen zu sichern.

Die Sperrung und die Freigabe des Aufnahmeraums können technisch besonders einfach umgesetzt werden, wenn die Arretierungshülse quer zu einer länglichen Ausdehnung der Arme der Verschlusseinheit verformbar oder bewegbar angeordnet ist. Die Arme der Verschlusseinheit können endseitig mit der Arretierungshülse wechselwirken, wobei die Arretierungshülse durch einen Schlitz oder eine Ausnehmung im Gehäuse zwischen den Armen der Verschlusseinheit entlang des Arretierungsabschnitts hindurchragen kann. Die Arme der Verschlusseinheit können beispielsweise Aussparungen oder Anschläge zum bereichsweisen Führen der Arretierungshülse aufweisen.

Nach einer weiteren Ausführungsform überragt der mindestens eine Arm der Verschlusseinheit radial zumindest bereichsweise die Hülse. Hierdurch erstreckt sich der mindestens eine Arm über eine radiale Ausdehnung bzw. einen äußeren Durchmesser der Hülse hinaus. Somit kann der mindestens eine Arm in entsprechende Ausnehmungen im Arretierungsabschnitt hineinragen und einen ungehinderten Zugang des Anschlussstutzens zum Aufnahmeraum gewährleisten. Insbesondere kann hierdurch ein abgestuft ausgeformter Anschlussstutzen in das Gehäuse eingesetzt werden, wobei die Arme der Verschlusseinheit als Begrenzungen für eine maximal zulässige Einsetztiefe dienen können.

Eine effiziente Führung der Arretierungshülse im Gehäuse kann realisiert werden, wenn der mindestens eine Arm der Verschlusseinheit die Arretierungshülse zumindest bereichsweise umgreift. Im Zusammenwirken des Arms mit dem Gehäuse kann eine Lagerung und Führung der Arretierungshülse, beispielsweise auch durch mehrere Arme der Verschlusseinheit, bereitgestellt werden, wodurch die Arretierungshülse besonders präzise geführt wird.

Bevorzugterweise kann die Arretierungshülse zumindest bereichsweise entlang des Gehäuses und/oder einem Abschnitt des mindestens einen Arms gleiten bzw. sich verformen. Eine derartige Verformung kann aufgrund der Führung und Lagern gezielt eindimensional erfolgen.

Die Arretierungshülse kann erst dann in das Gehäuse eingesetzt werden, wenn die Verschlusseinheit korrekt eingesetzt wurde. Ist beispielsweise die Verschlusseinheit ungleichmäßig bzw. schief im Gehäuse angeordnet, kann die Arretierungshülse durch mindestens einen Arm blockiert werden. Somit können die Arme der Verschlusseinheit als Indikator für einen korrekten Sitz der Verschlusseinheit im Gehäuse bzw. eine korrekte Montage dienen.

Nach einem weiteren Ausführungsbeispiel ist die Verschlusseinheit durch eine umfangsseitige Ausbuchung der Hülse und/oder durch den mindestens einen Arm ortsfest im Gehäuse positioniert. Insbesondere kann das Gehäuse im Bereich des Dichtungsraums und/oder des Arretierungsabschnitts eine korrespondierende Form aufweisen, mit welcher die umfangsseitige Ausbuchtung der Hülse und/oder die Form der Arme der Verschlusseinheit formschlüssig wechselwirken können. Durch ein derartiges Zusammenwirken der Verschlusseinheit mit dem Gehäuse kann ein vordefinierter Sitz der Verschlusseinheit und damit auch der Dichtringe im Gehäuse sichergestellt werden. Wobei die Verschlusseinheit ohne einen Materialabtrag aus dem Gehäuse entnommen werden kann.

Die Anordnung der Verschlusseinheit, der Arretierungshülse und/oder des Anschlussstutzens im Gehäuse können besonders einfach überprüft werden, wenn das Gehäuse im Bereich des Dichtungsraums oder im Bereich des Arretierungsabschnitts und/oder die Arretierungshülse mindestens eine umfangsseitig eingebrachte Öffnung aufweisen.

Beispielsweise kann die mindestens eine Öffnung bzw. ein Prüffenster im Arretierungsabschnitt in das Gehäuse eingebracht sein, um eine Sichtung der Arme und der Arretierungshülse zu ermöglichen. Mit Hilfe einer derartigen Öffnung kann neben einer Überprüfung der Montage auch eine Demontage der Verschlusseinheit vereinfacht werden.

Die Erfindung betrifft weiterhin eine Verbindungsanordnung. Die Verbindungsanordnung weist einen erfindungsgemäßen Schnellverbinder und einen Anschlussstutzen auf. Der Anschlussstutzen ist in einem Aufnahmeraum des Schnellverbinders hineinsetzbar.

Vorzugsweise kann der Anschlussstutzen durch eine Arretierungshülse im eingesetzten Zustand arretiert werden. Hierdurch kann ein nachträgliches oder unbeabsichtigtes Entnehmen des Anschlussstutzens aus dem Schnellverbinder verhindert werden. Durch ein Betätigen der Arretierungshülse, welche beispielsweise einen Aufnahmequerschnitt des Aufnahmeraums freigibt, kann der Anschlussstutzen von dem Schnellverbinder getrennt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Schnittdarstellung eines Schnellverbinders gemäß einer Ausführungsform,
- Fig. 2: eine Schnittdarstellung eines Arretierungsabschnitts des Schnellverbinders,
- Fig. 3: eine perspektivische Darstellung einer Verschlusseinheit gemäß einer Ausführungsform,
- Fig. 4: eine schematische Schnittdarstellung einer Verbindungsanordnung gemäß einer Ausführungsform,
- Fig. 5: eine schematische Schnittdarstellung der Verbindungsanordnung aus Fig. 4 und
- Fig. 6: eine perspektivische Darstellung einer Verbindungsanordnung.

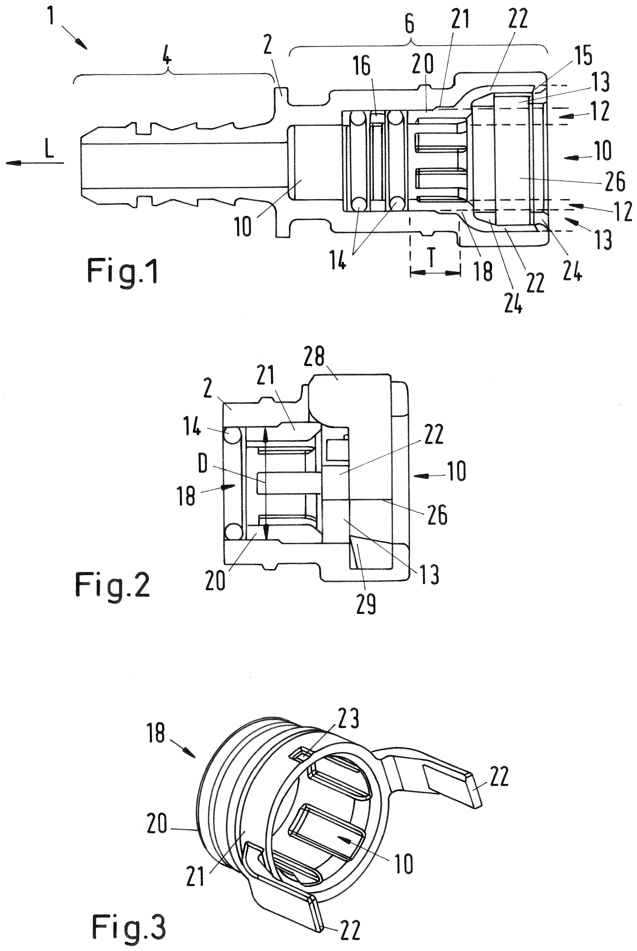

Die Fig. 1 zeigt eine Schnittdarstellung eines Schnellverbinders 1 gemäß einer Ausführungsform. Der Schnellverbinder 1 weist ein Gehäuse 2 auf, welches aus einem Kunststoff, einer Keramik oder einem Metall hergestellt sein kann.

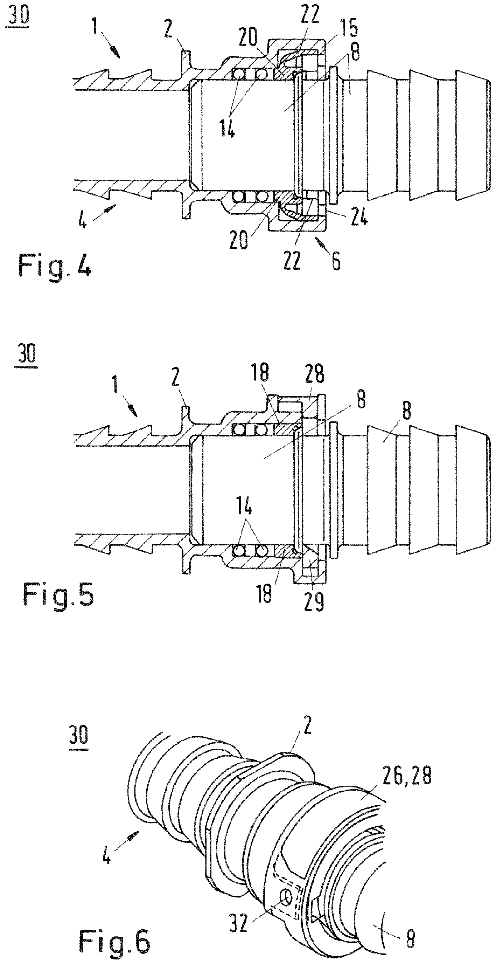

Das Gehäuse 2 ist zweiteilig aufgebaut und weist einen Leitungsabschnitt 4 auf, welcher in einen Aufnahmeabschnitt 6 übergeht. Der Leitungsabschnitt 4 dient zum endseitigen Aufnehmen von Rohren oder Schläuchen. Der Aufnahmeabschnitt 6 dient zum fluiddichten Aufnehmen von Anschlussstutzen 8 (s. Fig. 4).

Der Aufnahmeabschnitt 6 des Gehäuses 2 weist gemäß dem Ausführungsbeispiel einen Aufnahmeraum 10 auf. Der Aufnahmeraum 10 ist zylindrisch geformt und ist mittig im Aufnahmeabschnitt 6 ausgebildet. Koaxial um den Aufnahmeraum 10 ist ein Dichtungsraum 12 in das Gehäuse 2 eingebracht. Der Dichtungsraum 12 umgibt den Aufnahmeraum 10 bereichsweise. Der Dichtungsraum 12 und der Aufnahmeraum 10 werden in Längsrichtung L endseitig durch einen Arretierungsabschnitt 13 bzw. Arretierungsraum 13 aufgeweitet.

In dem Dichtungsraum 12 sind zwei Dichtringe 14 angeordnet. Die Dichtringe 14 sind gemäß dem Ausführungsbeispiel als O-Ringe ausgeführt und durch einen Abstandsring 16 entlang einer Längsachse L voneinander beabstandet. Die Dichtringe 14 sind derart angeordnet, dass ein in den Aufnahmeraum 10 eingesetzter Anschlussstutzen 8 fluiddicht umschlossen wird.

Damit die Dichtringe 14 und der Abstandsring 16 in einer vorgesehenen Position und Ausrichtung bleiben, ist eine Verschlusseinheit 18 vorgesehen. Die Verschlusseinheit 18 besteht aus einer Hülse 20. Von der Hülse 20 erstrecken sich zwei Arme 22 in Längsrichtung L. Die beiden Arme 22 sind in einem Abstand von 180° sich gegenüber liegend angeordnet. Insbesondere überragen die beiden Arme 22 einen Außendurchmesser D der Hülse 20.

Die Hülse 20 der Verschlusseinheit 18 ragt in einem eingesetzten Zustand in den Dichtungsraum 12 hinein und dient als eine Begrenzung für die Dichtringe 14. Für eine optimale Einstecktiefe T der Hülse 20 in Längsrichtung L kann die Hülse 20 eine Ausbuchtung 21 aufweisen, welche einen Formschluss mit dem Gehäuse 2 ausbildet. Im eingesetzten Zustand verhindert die Hülse 20, dass die Dichtringe 14 aus dem Dichtungsraum 12 hinausgleiten oder im Dichtungsraum 12 verrutschen.

Die Hülse 20 der Verschlusseinheit 18 wird durch die Arme 22 in Position bzw. im eingesetzten Zustand gehalten. Hierzu können die Arme 22 einrastend mit dem Arretierungsraum 13 wechselwirken.

Damit die Arme 22 der Verschlusseinheit 18 arretiert bleiben, wurde eine Spreizhülse 24 endseitig in das Gehäuse 2 eingesetzt. Die Spreizhülse 24 spreizt die Arme 22 radial und presst die Arme 22 gegen das Gehäuse 2. Am Gehäuse 2 ist vorzugsweise mindestens ein Vorsprung 15 angeordnet, welcher den Arretierungsraum 13 endseitig begrenzt und die gespreizten Arme 22 gegen ein Verrutschen formschlüssig sichert.

Die Spreizhülse 24 weist eine bereichsweise Aussparung auf, in welche eine Arretierungshülse 26 quer zur Längsrichtung L in das Gehäuse eingesetzt ist.

In der Fig. 2 ist eine Schnittdarstellung eines Arretierungsabschnitts 13 des Schnellverbinders 1 veranschaulicht. Die Arretierungshülse 26 wird hier aus einer anderen Perspektive dargestellt. Die Arretierungshülse 26 ragt durch das Gehäuse 2 hindurch und kann an einem Betätigungsabschnitt 28 in das Gehäuse 2 hineingedrückt werden.

Durch das Hineindrücken der Arretierungshülse 26 wird ein Arretierungspin 29 der Arretierungshülse 26 aus dem Aufnahmeraum 10 herausbewegt, um den Aufnahmeraum 10 für ein Aufnahmen oder Entfernen des Anschlussstutzens 8 freizugeben.

Wird der Betätigungsabschnitt 28 nicht eingedrückt, kehrt der Arretierungspin 29 aufgrund der elastischen Materialeigenschaften der Arretierungshülse 26 in seine ursprüngliche sperrende Position zurück.

Die Arretierungshülse 26 kann vorzugsweise zwischen den beiden Armen 22 der Verschlusseinheit 18 hindurchgleiten. Somit dienen die Arme 22 und/oder die Spreizhülse 24 als Führungen für die Arretierungshülse 26.

Die Fig. 3 veranschaulicht in einer perspektivischen Darstellung die Verschlusseinheit 18 gemäß einer Ausführungsform. Es wird hierbei die Ausformung der Verschlusseinheit 18 im Detail gezeigt.

Hülse 20 der Verschlusseinheit 18 bildet einen Teil des Aufnahmeraums 10 aus und kann durch die Arme 22 ortsfest im Gehäuse 2 angeordnet werden. Die Verschlusseinheit 18 kann je nach Ausgestaltung auch einen Arm 22 oder mehr als drei Arme 22 aufweisen. Die Arme 22 können hierbei gleichmäßig oder ungleichmäßig entlang eines Umfangs der Hülse 20 verteilt sein.

Damit die Verschlusseinheit 18 verdrehsicher im Gehäuse 2 angeordnet wird, können weitere Ausbuchtungen oder Ausnehmungen 23 vorgesehen sein, welche mit dem Gehäuse einen Formschluss ausbilden können. Hierdurch kann die Ausrichtung der Arme 22 gegenüber der Arretierungshülse 26 sichergestellt werden.

Die Fig. 4 und Fig. 5 zeigen schematische Schnittdarstellungen einer Verbindungsanordnung 30 gemäß einer Ausführungsform. Die Verbindungsanordnung 30 besteht aus einem Schnellverbinder 1 und einem im Schnellverbinder 1 fluiddicht einsetzbaren Anschlussstutzen 8.

Es werden hier die Wechselwirkungen der Komponenten des Schnellverbinders 1 und dem eingesetzten Anschlussstutzen 8 veranschaulicht. Die Dichtringe 14 werden zwischen dem Gehäuse 2 und dem Anschlussstutzen 8 verpresst, um eine Fluiddichtung auszubilden. Die Dichtringe 14 werden durch die Hülse 20 der Verschlusseinheit 18 in Position gehalten.

Die Arretierungshülse 26 spreizt die Arme 22 der Verschlusseinheit 18 auseinander gegen das Gehäuse 2 und stellt die korrekte Positionierung der Verschlusseinheit 18 im Gehäuse sicher. Gleichzeitig dienen die Arme 22 der Verschlusseinheit 18 als Gleitführungen für die Arretierungshülse 26. Abhängig von der Ausgestaltung des Schnellverbinders 1 kann die Spreizhülse 24 entfallen.

Darüber hinaus dient die Arretierungshülse 26 mit dem Arretierungspin 29 als Sicherung für den eingesetzten Anschlussstutzen 8.

In der Fig. 6 ist eine weitere perspektivische Darstellung einer Verbindungsanordnung 30 gemäß einem weiteren Ausführungsbeispiel gezeigt. Im Unterschied zu den bereits dargestellten Ausführungsbeispielen, ist in das Gehäuse 2 des Schnellverbinders 1 eine Öffnung 32 eingebracht.

Die Öffnung 32 ist an einem Abschnitt des Gehäuses 2 neben dem Betätigungsabschnitt 28 der Arretierungshülse 26 in das Gehäuse 2 eingebracht und ragt bis in den Aufnahmeraum 10 hindurch. Die Öffnung 32 kann somit zur Kontrolle einer korrekten Anordnung der Verschlusseinheit 18 und des Anschlussstutzens 8 eingesetzt werden.

### Bezugszeichenliste

- 1: Schnellverbinder
- 2: Gehäuse
- 4: Leitungsabschnitt
- 6: Aufnahmeabschnitt
- 8: Anschlussstutzen
- 10: Aufnahmeraum
- 12: Dichtungsraum
- 13: Arretierungsraum / Arretierungsabschnitt
- 14: Dichtring
- 15: Vorsprung des Arretierungsraums
- 16: Abstandsring
- 18: Verschlusseinheit
- 20: Hülse der Verschlusseinheit
- 21: Ausbuchtung der Hülse
- 22: mindestens ein Arm der Verschlusseinheit
- 23: Ausnehmung in der Hülse
- 24: Spreizhülse
- 26: Arretierungshülse
- 28: Betätigungsabschnitt
- 29: Arretierungspin
- 30: Verbindungsanordnung
- 32: Öffnung / Sichtfenster

- D: Außendurchmesser der Hülse
- L: Längsachse
- T: Einstecktiefe der Hülse

## Patentansprüche

1. Schnellverbinder (1) aufweisend ein Gehäuse (2) mit einem Aufnahmeraum (10) zum fluiddichten Aufnehmen eines Anschlussstutzens (8), wobei der Aufnahmeraum (10) in einen Leitungsabschnitt (4) zum Führen eines Fluids übergeht, aufweisend einen den Aufnahmeraum (10) zumindest bereichsweise umfangsseitig umgebenden Dichtungsraum (12) mit mindestens einem im Dichtungsraum (12) angeordneten Dichtring (14) und aufweisend eine Verschlusseinheit (18) zum Arretieren des mindestens einen Dichtrings (14) im Dichtungsraum (12), wobei die Verschlusseinheit (18) eine Hülse (20) aufweist, welche den Dichtungsraum (12) zumindest bereichsweise begrenzt und mindestens einen sich von der Hülse (20) erstreckenden Arm (22) aufweist, welcher dazu ausgebildet ist, die Verschlusseinheit (18) am Gehäuse (2) zu arretieren, wobei der Dichtungsraum (12) an einem dem Leitungsabschnitt (4) gegenüber liegenden Ende (6) in einen Arretierungsabschnitt (13) übergeht, welcher den Dichtungsraum (12) radial überragt und/oder axial endseitig durch einen Vorsprung (15) begrenzt ist, wobei der mindestens eine Arm (22) der Verschlusseinheit (18) in den Arretierungsabschnitt (13) hineinragt
**dadurch gekennzeichnet, dass** der mindestens eine Arm (22) durch eine Arretierungshülse (26) radial gespreizt ist.

2. Schnellverbinder nach Anspruch 1, wobei die Arretierungshülse (26) endseitig in den Arretierungsabschnitt (13) einsetzbar ist.

3. Schnellverbinder nach einem der Ansprüche 1 oder 2, wobei die Verschlusseinheit (18) zwei Arme (22) aufweist, welche sich von der Hülse (20) erstrecken, wobei die Arme (22) umfangsseitig sich gegenüber liegend angeordnet sind.

4. Schnellverbinder nach einem der Ansprüche 1 bis 3, wobei die Arretierungshülse (26) zum Freigeben des Aufnahmeraums (10) für den Anschlussstutzen (8) quer zu einer Längsrichtung (L) verformbar oder bewegbar ist.

5. Schnellverbinder nach Anspruch 3, wobei die Arretierungshülse (26) quer zu einer länglichen Ausdehnung der Arme (22) der Verschlusseinheit (18) verformbar oder bewegbar angeordnet ist.

6. Schnellverbinder nach einem der Ansprüche 1 bis 5, wobei der mindestens eine Arm (22) der Verschlusseinheit (18) radial zumindest bereichsweise die Hülse (20) überragt.

7. Schnellverbinder nach einem der Ansprüche 1 bis 6, wobei der mindestens eine Arm (22) der Verschlusseinheit (18) die Arretierungshülse (26) zumindest bereichsweise umgreift.

8. Schnellverbinder nach einem der Ansprüche 1 bis 7, wobei die Verschlusseinheit (18) durch eine umfangsseitige Ausbuchung (21) der Hülse (20) und/oder durch den mindestens einen Arm (22) ortsfest im Gehäuse (2) positioniert ist.

9. Schnellverbinder nach einem der Ansprüche 1 bis 8, wobei das Gehäuse (2) im Bereich des Dichtungsraums (12) oder im Bereich des Arretierungsabschnitts (13) und/oder die Arretierungshülse (26) mindestens eine umfangsseitig eingebrachte Öffnung (32) aufweisen.

10. Verbindungsanordnung (30), aufweisend einen Schnellverbinder (1) gemäß einem der vorhergehenden Ansprüche und aufweisend einen Anschlussstutzen (8), welcher in einem Aufnahmeraum (10) des Schnellverbinders (1) hineinsetzbar ist.

## Claims

1. Quick connector (1) comprising a housing (2) having a receiving chamber (10) for receiving, in a fluid-tight manner, a connecting piece (8), wherein the receiving chamber (10) transitions into a line portion (4) for conveying a fluid; comprising a sealing chamber (12) which surrounds at least parts of the circumference of the receiving chamber (10) and has at least one sealing ring (14) arranged in the sealing chamber (12); and comprising a closure unit (18) for locking the at least one sealing ring (14) in the sealing chamber (12); wherein the closure unit (18) comprises a sleeve (20), which delimits at least parts of the sealing chamber (12) and has at least one arm (22) extending from the sleeve (20), which arm is designed to lock the closure unit (18) on the housing (2), wherein at one end (6) opposing the line portion (4), the sealing chamber (12) transitions into a locking portion (13) which radially protrudes over the sealing chamber (12) and/or is axially delimited on the end side by a projection (15), wherein the at least one arm (22) of the closure unit (18) protrudes into the locking portion (13),
**characterized in that** the at least one arm (22) is radially spread apart by a locking sleeve (26).

2. Quick connector according to Claim 1, wherein the locking sleeve (26) is able to be inserted into the locking portion (13) on the end side.

3. Quick connector according to one of Claims 1 or 2, wherein the closure unit (18) has two arms (22) which extend from the sleeve (20), wherein the arms (22) are arranged opposingly on the circumferential side.

4. Quick connector according to one of Claims 1 to 3, wherein the locking sleeve (26) is deformable or movable transversely to a longitudinal direction (L) in order to release the receiving chamber (10) for the connecting piece (8).

5. Quick connector according to Claim 3, wherein the locking sleeve (26) is arranged so as to be deformable or movable transversely to a longitudinal extension of the arms (22) of the closure unit (18).

6. Quick connector according to one of Claims 1 to 5, wherein the at least one arm (22) of the closure unit (18) radially protrudes over the sleeve (20) at least in some regions.

7. Quick connector according to one of Claims 1 to 6, wherein the at least one arm (22) of the closure unit (18) encompasses the locking sleeve (26) at least in some regions.

8. Quick connector according to one of Claims 1 to 7, wherein the closure unit (18) is positioned in a fixed manner in the housing (2) by means of a circumferential bulge (21) of the sleeve (20) and/or by means of the at least one arm (22).

9. Quick connector according to one of Claims 1 to 8, wherein the housing (2) in the region of the sealing chamber (12) or in the region of the locking portion (13) and/or the locking sleeve (26) comprise at least one opening (32) incorporated on the circumferential side.

10. Connection assembly (30) comprising a quick connector (1) according to one of the preceding claims and comprising a connecting piece (8) which is able to be inserted into a receiving chamber (10) of the quick connector (1).

## Revendications

1. Connecteur rapide (1) comportant un boîtier (2) pourvu d'un espace de réception (10) destiné à recevoir de manière étanche un embout de raccordement (8), l'espace de réception (10) se transformant en une portion de conduite (4) destinée à guider un fluide, comportant un espace d'étanchéité (12) qui entoure périphériquement l'espace de réception (10) au moins par zones et qui comprend au moins une bague d'étanchéité (14) disposée dans l'espace d'étanchéité (12), et comportant une unité de fermeture (18) destinée à verrouiller au moins une bague d'étanchéité (14) dans l'espace d'étanchéité (12), l'unité de fermeture (18) comportant un manchon (20) qui délimite au moins par zones l'espace d'étanchéité (12) et qui comporte au moins un bras (22) qui s'étend depuis le manchon (20) et qui est conçu pour verrouiller l'unité de fermeture (18) sur le boîtier (2), l'espace d'étanchéité (12) se transformant à une extrémité (6) opposée à la portion de conduite (4) en une portion de verrouillage (13) qui fait saillie radialement de l'espace d'étanchéité (12) et/ou qui est limitée axialement à l'extrémité par une saillie (15), l'au moins un bras (22) de l'unité de fermeture (18) faisant saillie dans la portion de verrouillage (13), **caractérisé en ce que** l'au moins un bras (22) est écarté radialement par un manchon de verrouillage (26).

2. Connecteur rapide selon la revendication 1, le manchon de verrouillage (26) pouvant être inséré dans la portion de verrouillage (13) à l'extrémité.

3. Connecteur rapide selon l'une des revendications 1 ou 2, l'unité de fermeture (18) comportant deux bras (22) qui s'étendent depuis le manchon (20), les bras (22) étant disposés périphériquement l'un en face de l'autre.

4. Connecteur rapide selon l'une des revendications 1 à 3, le manchon de verrouillage (26) étant déformable ou mobile transversalement à une direction longitudinale (L) afin de libérer l'espace de réception (10) destiné à l'embout de raccordement (8).

5. Connecteur rapide selon la revendication 3, le manchon de verrouillage (26) étant disposé de manière déformable ou mobile transversalement jusqu'à une extension allongée des bras (22) de l'unité de fermeture (18).

6. Connecteur rapide selon l'une des revendications 1 à 5, au moins un bras (22) de l'unité de fermeture (18) faisant saillie radialement du manchon (20) au moins dans certaines zones.

7. Connecteur rapide selon l'une des revendications 1 à 6, au moins un bras (22) de l'unité de fermeture (18) entourant le manchon de verrouillage (26) au moins dans certaines zones.

8. Connecteur rapide selon l'une des revendications 1 à 7, l'unité de fermeture (18) étant positionnée de manière fixe dans le boîtier (2) par un renflement périphérique (21) du manchon (20) et/ou par l'au moins un bras (22).

9. Connecteur rapide selon l'une des revendications 1 à 8, le boîtier (2) dans la zone de l'espace d'étanchéité (12) ou dans la zone de la portion de verrouillage (13) et/ou le manchon de verrouillage (26) comportant au moins une ouverture (32) ménagée en périphérie.

10. Ensemble de liaison (30), comprenant un connecteur rapide (1) selon l'une des revendications précédentes et comportant un embout de raccordement (8) qui peut être inséré dans un espace de réception (10) du connecteur rapide (1).
